# EUROPEAN PATENT APPLICATION

(11) **EP 2 008 973 A1**
(43) Date of publication of application: **31.12.2008**
(21) Application number: 07111458.1
(22) Date of filing: 29.06.2007
(51) Int. Cl.: C02F 1/42, C02F 9/00

(54) **Purification of waste water from cleaning of facade walls**

(71) Applicant: AB Grundstenen 115144, 182 64 Djursholm (SE)
(72) Inventor: Ivarsson, Per-Arne, 415 02, Göteborg (SE); Hållberg, Mats, 192 51, Sollentuna (SE)
(74) Representative: Pierrou, Mattias

(57) **Abstract**

The present invention relates to purification of used aqueous cleaning liquid resulting from washing of a façade wall, comprising collecting the used cleaning liquid in a storm drain (400) located in the vicinity of the façade wall and subjecting the collected liquid to removal of particulate matter (101), organic compounds (102) and heavy metals (103).

## Description

### Field of the invention

The present invention relates to the field of purification of cleaning liquid. More specifically, the invention relates to purification of aqueous cleaning liquid resulting from washing of a façade wall.

### Background of the invention

Façade walls are washed *i*) to improve the esthetical appearance of the façade wall and/or to preserve the façade wall and/or *ii*) to prepare the façade wall for painting or other surface treatments in order to achieve a satisfactory and sustainable result.

Conventional techniques for façade wall washing include applying water under high pressure and application of water containing chemicals. Traditionally, the waste water resulting from such washings have been let out to the drainage system without purification. However, such waste water commonly contain contaminants which are harmful to humans, such as to the operator(s) performing the washing, and to the environment. For example, the waste water may contain heavy metals, such as heavy metals resulting from the pigments of eroding façade paint, such as linoleum based paint. Examples of pigments comprising heavy metal compounds are cadmium yellow (cadmium sulfide), cadmium red (cadmium selenide), cadmium orange (an intermediate cadmium sulfoselenide), chrome green, lead white, zinc white, cobalt blue, uranium yellow and copper sulfate. Further, the waste water resulting from façade walls which have been exposed to exhaust gases from vehicular traffic, such as façade walls in urban environments, may contain particularly high levels of lead and lead compounds.

WO 89/08082 discloses a device for treating waste water. The waste water is collected in a collapsible sheeting trough from which it is pumped to a first container for removal of particulate impurities. Water overflows from the first container to a second container for neutralization by the addition of acid or base. Water from the second container overflows to a third container from which it is released into the drains or recycled. A problem with the known device is that it is inconvenient, time consuming and inefficient to collect the waste water that is flowing and trickling along a façade wall in the large collapsible sheeting trough.

Consequently, there remains a need within the art for a method for removing heavy metals from used aqueous cleaning liquid resulting from washing of a façade wall.

### Summary of the invention

Thus, an object of the present invention is to provide a method and a system for removal of harmful contaminants from aqueous cleaning liquid resulting from washing of a façade wall.

Another object of the invention is to provide a method and a system for purifying used aqueous cleaning liquid resulting from washing of a façade wall comprising convenient collecting of the used cleaning liquid.

These and other objects of the present invention are achieved by means of a method and a system as characterized by the claims.

According to the invention, the method for purifying used aqueous cleaning liquid resulting from washing of a façade wall comprises: (a) allowing the used cleaning liquid to leave the façade wall; (b) collecting the used cleaning liquid of step (a) in a storm drain located in the vicinity of the façade wall; (c) pumping the collected liquid of step (b) out of the storm drain; (d) subjecting the liquid resulting from step (c) to removal of particulate matter; and (e) subjecting the liquid resulting from step (d) to removal of organic compounds and heavy metals.

According to the invention, the system for purifying used aqueous cleaning liquid comprises: a collecting device for collecting used cleaning liquid, wherein the collecting device is adapted for being arranged in a storm drain; a purification device for removing particulate matter, organic compounds and heavy metals from the collected, used cleaning liquid; and a pump device for pumping collected, used cleaning liquid from the collecting device to the purification device.

Collecting used cleaning liquid in a nearby storm drain, or a nearby street inlet, is very convenient, because the water leaving the façade wall is naturally directed to the storm drain, and no extra water directing means are required. By purifying the collected, used cleaning liquid at the washing site, no transportation of used cleaning liquid is needed, and the purified liquid may be discharged at the washing site, preferably through the storm drain to the sewer.

In one embodiment, the method according to the invention further comprises: (f) routing the liquid from step (e) to the storm drain located in the vicinity of the façade wall, thereby bypassing the collecting of step (b). Consequently, the purified liquid may be discharged in the same storm drain as in which the used cleaning liquid was collected, which is very convenient and requires minimal space in typical urban areas.

In one embodiment, the purification device of the system according to the invention is comprising: a prefilter for removing particulate matter; an organic compounds removing device; and an ion exchange filter for removing heavy metals. The prefilter is arranged upstream the organic compounds removing device and the ion exchange filter; and the organic compounds removing device and the ion exchange filter is the same device or two different devices.

An "ion exchange filter" refers to any ion exchange means comprising ion exchange material, including an ion exchange column.

In one embodiment, the purification device of the system according to the invention is further comprising a centrifuge device arranged upstream the prefilter. By using a centrifuge device, solids may be removed from the used cleaning liquid prior to further waste water treatment.

The prefilter is arranged upstream the organic compounds removing device and the ion exchange filter to remove hazardous particles and protect the organic compounds removing device and the ion exchange filter. For example, the prefilter may be a 50 µm particle filter. The organic compounds removing device may be any appropriate device known to the skilled man. For example, the organic compounds removing device may comprise activated carbon. The organic compounds removing device and the ion exchange filter may be the same device or two different devices. For example, they may be the same device comprising both activated carbon and ion exchange material.

In one embodiment, the purification device may further comprise a chelating ion exchange filter for removing heavy metals arranged downstream the prefilter. The chelating ion exchange filter further reduces the amount of heavy metal to very low levels, which may be necessary to fulfill environmental policy requirements.

In one embodiment of the invention, the collecting device is comprising a trough and a flange for maintaining the trough in a storm drain. Consequently, liquids, such as used cleaning liquid from façade cleaning, flowing to the storm drain may be collected in the trough of the collecting device, and the pump device may pump the collected liquid from the trough to the purification device. For example, the pump device may comprise a pump that operates under water. As an example, the pump device comprises a pump that fits inside the trough. Consequently, the only pump required for the collecting and purification actions may be arranged inside the trough of the collecting device. As an example, a regulator starting the pump when at least an inlet of the pump is covered with water may be arranged at the pump.

In one embodiment, the system according to the invention further comprises discharge means for routing purified, used aqueous cleaning liquid obtainable from the purification device to a storm drain, thereby by-passing the collecting device. "By-passing the collecting device" refers to letting liquid pass down into the storm drain without being collected by any collecting device arranged therein. Consequently, the purified, used aqueous cleaning liquid may be discharged at the washing site in the same storm drain where it was collected before it was purified, which is convenient and requires minimal space in typical urban areas.

As an example, the discharge means is arranged at the trough or flange of a collecting device comprising such parts so as to route the purified, used aqueous cleaning liquid through the trough or flange. As an example, the discharge means is arranged at the trough. As another example, the discharge means are arranged at the flange. For example, the discharge means may comprise at least one pipe. As an example, the discharge means comprises at least two pipes. Consequently, the purified, used aqueous cleaning liquid may be routed through a first pipe and discharge water from another apparatus or operation may be routed through a second pipe.

Further objects and advantages of the present invention will be discussed below by means of exemplifying embodiments.

### Brief description of the drawings

In the following detailed description, reference will be made to the accompanying drawings, of which:
Fig 1 shows a schematic representation, including a cross-sectional view of an embodiment of a collecting device, of one embodiment of a system for purifying used aqueous cleaning liquid;
Fig 2 shows a simplified cross-sectional view of one embodiment of a collecting device; and
Fig 3 shows a simplified cross-sectional view of another embodiment of a collecting device.

### Exemplifying embodiments

The embodiments presented below are provided as examples and are not limiting to the invention.

### System for purifying used aqueous cleaning liquid

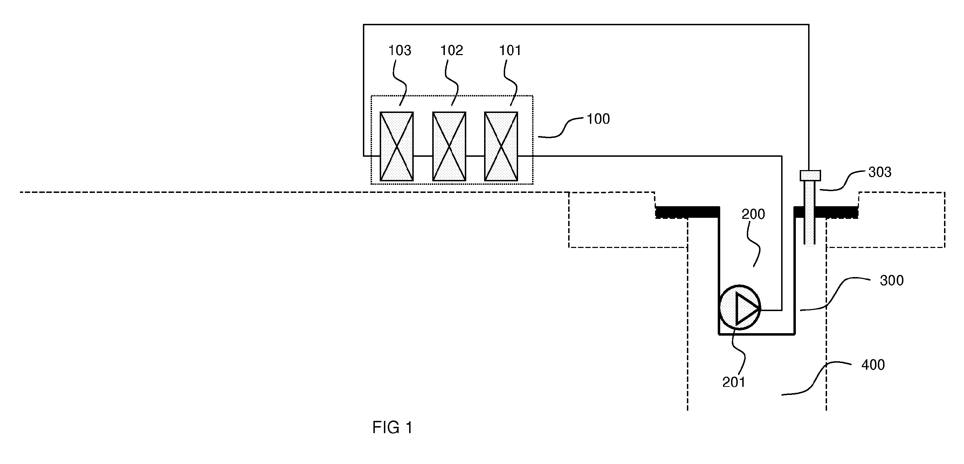

With reference to figure 1, an embodiment of a system for purifying used aqueous cleaning liquid comprises a collecting device 300 adapted for being arranged in a storm drain 400. As an example, used cleaning liquid leaving a façade wall is naturally directed the storm drain 400 and collected in the collecting device 300 being arranged therein. The system comprises a pumping device 200 comprising a pump 201 which is arranged inside the collecting device 300. A regulator starting the pump 201 when at least the inlet of the pump 201 is covered with water may be arranged at the pump. A purification device 100 is arranged downstream the pumping device 200 such that collected, used cleaning liquid may be pumped from the collecting device 300 to the purification device 100. The purification device 100 comprises, arranged in series: a prefilter 101, such as a particle filter, such as a 10-500 µm particle filter, such as a 50-150 µm particle filter, preferably a 50 µm particle filter, or alternatively, a 100 µm particle filter; an organic compounds removing device, such as a device comprising activated carbon, such as a device comprising activated carbon and ion exchange material 102, such as a device comprising activated carbon and ion exchange material for removal of heavy metals; and an ion exchange filter, such as a chelating ion exchange filter 103 for removing heavy metals. An outlet of the purification device 100 is connected to discharge means 303 arranged on the collecting device 300. The discharge means 303 may route purified, used aqueous cleaning liquid from the purification device 100 through a storm drain 400 to the sewer, thereby by-passing the collecting device 300 arranged in the storm drain 400.

### Collecting device

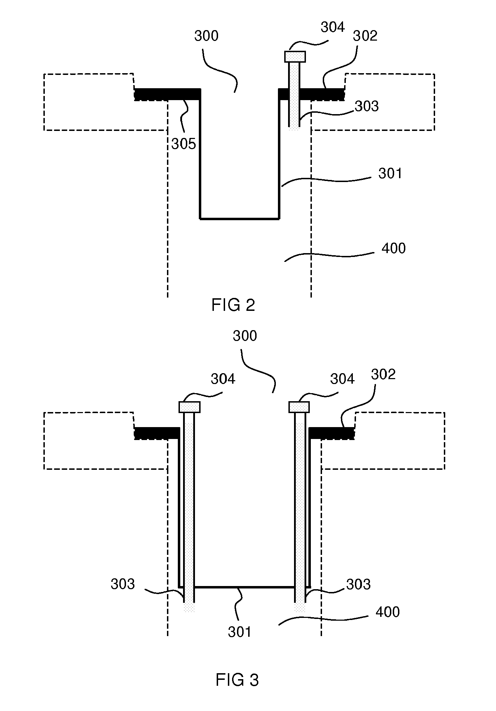

With reference to figures 2 and 3, an embodiment of a collecting device 300 comprises a trough 301 and a flange 302 for maintaining the trough 301 in a storm drain 400. When the collecting device 300 is arranged in the storm drain 400, the flange 302 rests upon the same surface (the contact surface) as a storm drain lid or grating does when covering the storm drain 400. The flange has a lower part 305, wherein at least part of the lower part is being in contact with the contact surface when the collecting device 300 is arranged in a storm drain 400. A packing, such as a rubber packing, (not shown) may be provided on the lower part for preventing that water leaks into the storm drain. A pump (not shown) for pumping used cleaning liquid collected in the trough 301 to a purification device (not shown) may be arranged inside the trough 301. At least one pipe 303 is arranged at the flange 302 or trough 301 so that liquids can flow through the collecting device 300 down the storm drain 400. Each pipe 303 has a upper and lower opening, wherein the lower opening, when the collecting device 300 is arranged in a storm drain 400, is facing the inside of the storm drain 400 and the upper opening is opposite to the lower opening facing open air. A connecting means 304 for connecting a pipe 303 to a hose (not shown) is arranged at the upper opening of the pipe(s) 303. For example, the hose(s) may, at its (their) other end, be connected to the purification device (not shown) and/or another apparatus producing discharge water.

While the invention disclosed herein has been described by means of specific embodiments and applications thereof, numerous modifications and variations could be made therein by those skilled in the art without departing from the scope of the invention, which is defined by the appended claims.

## Claims

1. A method for purifying used aqueous cleaning liquid resulting from washing of a façade wall, comprising:
(a) allowing said used cleaning liquid to leave said façade wall;
(b) collecting said used cleaning liquid of step (a) in a storm drain located in the vicinity of said façade wall;
(c) pumping said collected liquid of step (b) out of said storm drain;
(d) subjecting the liquid resulting from step (c) to removal of particulate matter; and
(e) subjecting the liquid resulting from step (d) to removal of organic compounds and heavy metals.

2. The method according to claim 2, further comprising:
(f) routing the liquid from step (e) to the storm drain located in the vicinity of said façade wall, bypassing the collecting of step (b).

3. A system for purifying used aqueous cleaning liquid, comprising:
a collecting device (300) for collecting used cleaning liquid, wherein said collecting device is adapted for being arranged in a storm drain (400);
a purification device (100) for removing particulate matter, organic compounds and heavy metals from said collected, used cleaning liquid; and a pump device (200) for pumping collected, used cleaning liquid from said collecting device to said purification device (100).

4. A system according to claim 3, wherein said purification device (100) is comprising:
a prefilter (101) for removing particulate matter;
an organic compounds removing device; and
an ion exchange filter for removing heavy metals,
wherein:
said prefilter (101) is arranged upstream said organic compounds removing device and said ion exchange filter; and
said organic compounds removing device (101) and said ion exchange filter is the same device or two different devices.

5. A system according to claim 4, wherein said organic compounds removing device is comprising activated carbon.

6. A system according to claim 5, wherein said purification device (100) further comprises a chelating ion exchange filter (103) for removing heavy metals arranged downstream said prefilter (101).

7. A system according to any one of claims 3-6, wherein said collecting device (300) is comprising a trough (301) and a flange (302) for maintaining said trough in a storm drain (400).

8. A system according to claim 7, wherein said pump device (200) comprises a pump (201) that fits inside the trough (301).

9. A system according to any one of claims 3-8, further comprising discharge means (303) for routing purified, used aqueous cleaning liquid obtainable from said purification device (100) to a storm drain (400), thereby by-passing said collecting device (300).

10. A system according to any one of claims 7-8, further comprising discharge means (303) for routing purified, used aqueous cleaning liquid obtainable from said purification device (100) to a storm drain (400), thereby by-passing said collecting device (300), wherein said discharge means (303) are arranged at said trough (301) or flange (302) so as to route said purified, used aqueous cleaning liquid through said trough (301) or flange (302).
